# EUROPÄISCHE PATENTSCHRIFT

(11) **EP 2 067 962 B1**
(45) Veröffentlichungstag und Bekanntmachung des Hinweises auf die Patenterteilung: **23.09.2015**
(21) Anmeldenummer: 08169945.6
(22) Anmeldetag: 26.11.2008
(51) Int. Cl.: F01D 17/14, F02C 6/12

(54) **Turbine eines Abgasturboladers einer Brennkraftmaschine**
Turbine for an exhaust gas turbocharger in a combustion engine
Turbine d'un turbocompresseur à gaz d'échappement d'un moteur à combustion interne

(30) Priorität: 05.12.2007 DE 102007058527
(43) Veröffentlichungstag der Anmeldung: 10.06.2009
(73) Patentinhaber: Bosch Mahle Turbo Systems GmbH & Co. KG, 70376 Stuttgart (DE)
(72) Erfinder: Soeguet, Senol, 70565, Stuttgart (DE); Steidten, Thomas, 71636, Ludwigsburg (DE)
(74) Vertreter: BRP Renaud & Partner mbB Rechtsanwälte Patentanwälte Steuerberater

(56) Entgegenhaltungen:
- EP-A2- 2 028 347
- WO-A1-96/04487
- WO-A1-2004/035994
- WO-A1-2004/074642
- DE-A1- 2 633 587
- DE-A1- 10 152 804
- DE-C1- 3 908 285
- DE-C1- 4 232 400
- DE-C1- 4 303 520
- DE-C1- 4 303 521
- US-A1- 2007 209 361

## Beschreibung

Die Erfindung betrifft eine Turbine eines Abgasturboladers einer Brennkraftmaschine, insbesondere für ein Kraftfahrzeug, mit einem Turbinenrad und einer Anströmeinrichtung für ein dem Turbinenrad zuzuführendes Medium.

### Stand der Technik

Zur Optimierung der Leistung von Brennkraftmaschine werden heute überwiegend Abgasturbolader verwendet, die aus einer Turbine und einem Verdichter bestehen. Die Turbine entzieht heißem Abgas unter hohem Druck Energie und wandelt diese in Bewegungsenergie um, die den Verdichter antreibt, der Ansaugluft komprimiert und der Brennkraftmaschine zur Verfügung stellt. Es sind mehrere Bauformen von Turbinen bekannt, beispielsweise Radialturbinen und Axialturbinen, wobei für Kraftfahrzeugzwecke ausschließlich Radialturbinen Verwendung finden. Sowohl Verdichter als auch Turbine können nicht nur im Bereich ihres optimalen Auslegungspunktes betrieben werden, da der Abgasturbolader die Brennkraftmaschine in allen Motorbetriebspunkten mit ausreichend Luft versorgen muss. Ein solcher Betrieb außerhalb des Auslegungspunktes des Abgasturboladers kann zwar erfolgen, jedoch ist hierbei der Wirkungsgrad des Abgasturboladers nicht optimal, was sich in erhöhtem Kraftstoffverbrauch der Brennkraftmaschine und auch in erhöhten Schadstoffemissionen auswirken kann. Ferner verzögern schlechte Turboladerwirkungsgrade im transienten Betrieb die Beschleunigung von Turbinenrad und Verdichterrad des Abgasturboladers und damit die Beschleunigung der Brennkraftmaschine. Um derartige Nachteile zumindest teilweise kompensieren zu können, werden im Stand der Technik vermehrt Turbinen mit variabler Turbinengeometrie, insbesondere mit variabler Leitbeschaufelung eingesetzt; diese ersetzen nach und nach die einfacher aufgebauten Wastegate-geregelten Turbinen. Sie weisen jedoch komplizierte Verstellmechanismen auf, die überdies bei den in Abgasturboladern herrschenden sehr hohen Betriebstemperaturen und dem Dauerbetrieb und über die Zeit zu Störungen neigen können. In ungünstigen Fällen führt dies bei den in Abgasturboladern herrschenden sehr hohen Drehzahlen zu Funktionsstörungen und zu Ausfällen.

Eine Turbine mit variabler Turbinen-geometrie zeigt das Dokument DE-C-4 303 520.

Aufgabe der Erfindung ist es, eine Turbine eines Abgasturboladers einer Brennkraftmaschine bereitzustellen, die die genannten Nachteile vermeidet, signifikant höhere Wirkungsgrade bereitstellt und hierbei weitestgehend auf komplizierte oder störanfällige Verstellmechanismen der Turbinengeometrie verzichtet.

### Offenbarung der Erfindung

Hierzu wird eine Turbine eines Abgasturboladers einer Brennkraftmaschine, insbesondere für ein Kraftfahrzeug wie im Anspruch 1 angegeben, vorgeschlagen. Die Erfindung nutzt die Erkenntnis, dass zur Erreichung maximaler Drehmomente vorteilhaft eine Radialturbine einzusetzen ist, wohingegen für Betriebe im Nennleistungspunkt sowohl eine Radialturbine, bevorzugt aber eine Axialturbine eingesetzt wird. Das Turbinenrad wird folglich mit einer Radialbeschaufelung ausgebildet, etwa in der Art eines aus dem Stand der Technik bekannten, klassischen Radialturbinenrades. In Axialverlängerung der Radialbeschaufelung weist das Turbinenrad zusätzlich eine Diagonalbeschaufelung auf, die wahlweise oder auch gleichzeitig zu der Radialbeschaufelung mit dem Medium, insbesondere einem Abgasstrom, beaufschlagt werden kann. Hierzu ist die Anströmeinrichtung der Turbine in einer solchen Weise verstellbar, dass der Mediumstrom in radialer Richtung der Radialbeschaufelung und/oder in diagonaler Richtung der Diagonalbeschaufelung zuführbar ist. Die Anströmeinrichtung lässt demzufolge eine wahlweise Beaufschlagung der Radialbeschaufelung oder der Diagonalbeschaufelung zu. Dies lässt sich beispielsweise durch ein Verschwenken von Zuführkanälen oder durch das Umschalten feststehender Zuführkanäle bewirken, wobei dieses Umschalten binär erfolgen kann, sodass wahlweise entweder die Radialbeschaufelung oder aber die Diagonalbeschaufelung beaufschlagt wird, oder graduell, sodass die Beaufschlagung beispielsweise der Radialbeschaufelung in eine solche der Diagonalbeschaufelung übergehen kann, und umgekehrt.

In einer weiteren Ausführungsform weist die Anströmeinrichtung eine verlagerbare Verstellblende auf. Die Verstellblende sperrt, in Abhängigkeit von ihrer Stellung, die durch Verlagerung der Verstellblende bewirkt wird, den Mediumstrom in Richtung auf die eine Beschaufelung und gibt ihn hierbei in Richtung auf die andere Beschaufelung frei.

In einer weiteren Ausführungsform ist die Verstellblende axial verschiebbar gelagert. Die Verlagerung der Verstellblende erfolgt demzufolge durch eine Verschiebung in Axialrichtung, also insbesondere parallel zu einer Turbinendrehachse. Axialverstellungen lassen sich einfach bewirken und sind bauraumsparend zu verwirklichen, wobei eine unerwünschte Beeinflussung mit Zuführwegen des Mediumstroms nicht erfolgt, da auf umfangsseitige oder radial angeordnete Anbauteile praktisch vollständig verzichtet werden kann.

In einer bevorzugten Ausführungsform wirkt die Verstellblende mit mehreren Mediumstromwegen der Turbine zusammen. Die Anströmeinrichtung weist hierbei mehrere Mediumstromwege auf, dergestalt, dass diese beispielsweise umfangsseitig verteilt angeordnet sind und die Turbine, nämlich insbesondere das Turbinenrad, beispielsweise gleich Winkelbeabstandet zueinander mit dem Mediumstrom beaufschlagen. Hierdurch lässt sich ein besonders hoher Wirkungsgrad und insbesondere ein von unerwünschten Momenten freier Impulseintrag und eine entsprechend gute Beschleunigung des Turbinenrades erreichen.

In einer weiteren bevorzugten Ausführungsform ist die Verstellblende als Verstellhülse ausgebildet. Die Verstellblende bildet demzufolge eine Hülse, die insbesondere konzentrisch zum Turbinenrad der Turbine angeordnet ist und durch ihre Verlagerung, insbesondere Axialverschiebung, die Verstellung bewirkt. Dies erlaubt eine gleichmäßige Verstellung um den Umfang der Turbine, wobei nur an einer Stelle ein Kraftangriff erfolgen muss. Insbesondere die Verstellung im Zusammenwirken mit mehreren Mediumstromwegen der Turbine kann so auf einfache Weise und gleichmäßig bewirkt werden, da die Hülse insgesamt mit nur einem Kraftangriff verstellt werden kann und hierbei die Verstellung hinsichtlich mehrerer Mediumstromwege bewirkt, die über den Umfang der Turbine verteilt sind.

In einer hierbei besonders bevorzugten Ausführungsform weist die Verstellhülse Durchbrüche für das Medium auf, insbesondere Langlöcher. Diese dienen zum Mediumdurchtritt, die Verstellhülse öffnet und sperrt demzufolge Mediumstromwege der Turbine, abhängig davon, wie die Anströmung erfolgen soll, nämlich auf die Radialbeschaufelung oder auf die Diagonalbeschaufelung. Die Durchbrüche sind hierbei bevorzugt so ausgebildet, beispielsweise als Langlöcher, dass der vollständige Durchmesser des jeweiligen Mediumstromweges freigegeben oder gesperrt werden kann. Das Öffnen und Sperren des Mediumstromweges geschieht hierbei folglich nicht schlagartig oder ruckartig, sondern im Wesentlichen graduell, nämlich so, dass die Verstellhülse eine endliche Zeitspanne benötigt, um durch Verschiebung des Durchbruchs in den Mediumstromweg beziehungsweise aus dem Mediumstromweg heraus diesen freizugeben oder zu sperren. Gleichwohl ist diese Zeit sehr gering, da die Verstellhülse nur einen recht geringen Verschiebeweg aufweist, der in sehr kurzer Zeit zurückgelegt werden kann.

In einer anderen bevorzugten Ausführungsform ist die Verstellhülse drehbar koaxial um das Turbinenrad gelagert. Die Umschaltung zwischen verschiedenen Mediumstromwegen, insbesondere zwischen der Radialbeschaufelung und der Diagonalbeschaufelung, wird hierbei dadurch bewirkt, dass die Verstellhülse in ihrer einen Stellung den Mediumstromweg, der beispielsweise zur Radialbeschaufelung führt, freigibt, während sie in dieser Stellung den Mediumstromweg zur Diagonalbeschaufelung sperrt. Wird die Verstellhülse nun um einen bestimmten Winkel koaxial verdreht, so wird der Mediumstromweg zur Radialbeschaufelung gesperrt, und statt seiner der Mediumstromweg zur Diagonalbeschaufelung freigegeben. Die Mediumstromwege sind hierzu bevorzugt im Umfang versetzt angeordnet, sodass die vorstehend beschriebene Wirkungsweise ohne weitere mechanische Vorkehrungen durch einfaches Abdecken oder Freigeben der Mediumstromwege bei Verdrehung der Verstellhülse möglich ist.

In einer weiteren Ausführungsform berücksichtigt der Parameter die Leistung der Brennkraftmaschine und/oder das Drehmoment der Brennkraftmaschine. Im Stand der Technik ist aus dem so genannten Cordier-Diagramm für verschiedene Betriebspunkte von Turbinen bekannt, dass Radialturbinen ein maximales Drehmoment erreichen, während der Betrieb am Nennleistungspunkt bevorzugt axial erfolgt. Der Parameter, der zur Umschaltung des Mediumstroms ausgewertet wird, berücksichtigt demzufolge die Leistung der Brennkraftmaschine und/oder deren Drehmoment. Wird bevorzugt ein sehr hohes Drehmoment gewünscht, wird der Mediumstrom ausschließlich auf die Radialbeschaufelung geleitet, während für einen Betriebspunkt im Nennleistungsbereich der Mediumstrom der Diagonalbeschaufelung zugeführt wird.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels näher erläutert, ohne jedoch hierauf beschränkt zu sein. Es zeigen:
- Figur 1: eine abschnittsweise Axialschnittdarstellung der Turbine mit einer auf Radialbetrieb geschalteten Verstellblende und
- Figur 2: dieselbe Turbine mit auf Diagonalbetrieb geschalteter Verstellblende.

### Ausführungsform(en) der Erfindung

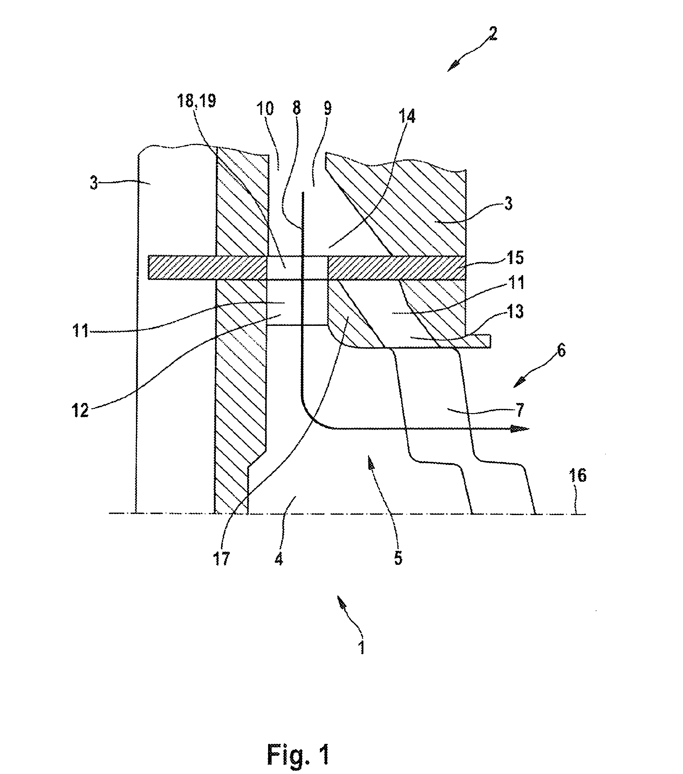

Figur 1 zeigt eine abschnittsweise Axialschnittdarstellung einer Turbine 1 eines Abgasturboladers 2, der nur abschnittsweise dargestellt ist. Die Turbine 1 weist in einem Gehäuse 3 ein Turbinenrad 4 mit einer Radialbeschaufelung 5 auf. Axial versetzt, in Richtung einer Auslassseite 6, zu der Radialbeschaufelung 5 ist auf der Radialbeschaufelung 5 oder zusätzlich zur Radialbeschaufelung 5 das Turbinenrad 4 mit einer Diagonalbeschaufelung 7 versehen. Das Gehäuse 3 weist zur Beaufschlagung des Turbinenrads 4 mit einem Mediumstrom 8 eine Anströmeinrichtung 9 auf, die zumindest im Wesentlichen im oder am Gehäuse 3 ausgebildet ist. Die Anströmeinrichtung 9 weist eine Mediumzuströmung 10 auf, die sich in zwei Mediumstromwege 11 in einer strömungsgünstigen Form aufteilt, und wobei jeder Mediumstromweg 11 entweder nur auf die Radialbeschaufelung 5 oder auf die Diagonalbeschaufelung 7 gerichtet ist. Es kann daher ein Radialmediumstromweg 12 von einem Diagonalmediumstromweg 13 unterschieden werden. Im Bereich eines Überganges 14 von der Mediumzuströmung 10 in die Mediumstromwege 11 ist eine im Wesentlichen axial, also parallel einer Turbinendrehachse 16, verlagerbare Verstellblende 15 vorgesehen, die im Bereich eines strömungsgünstigen Stromteilers 17 der Mediumzuströmung 10 einen als Langloch 18 ausgebildeten Durchbruch 19 aufweist, dessen Querschnitt dem Querschnitt der unmittelbar anschließenden Mediumstromwege 11 angepasst ist. Die Verstellblende 15 ist hinsichtlich ihrer Ausgestaltung, ihrer Anordnung und ihres Verstellweges so ausgebildet, dass sie in einem Zustand, der vorliegend dargestellt ist, über das Langloch 18 den Radialmediumstromweg 12 freigibt, den Diagonalmediumstromweg 13 hingegen sperrt. In dieser Stellung der Verstellblende 15 wird demzufolge das Turbinenrad 4 nur radial im Bereich der Radialbeschaufelung 5 mit dem Mediumstrom 8 beaufschlagt. In dieser Betriebsart lässt sich ein besonders hohes Drehmoment der Turbine 1 erreichen. Der Diagonalmediumstromweg 13 hingegen ist durch die Verstellblende 15 gesperrt. Eine direkte Beaufschlagung der Diagonalbeschaufelung 7 mit dem Mediumstrom 8 findet hier nicht statt; der Mediumstrom 8 wird lediglich axial in Richtung der Auslassseite 6 an der Diagonalbeschaufelung entlang geführt.

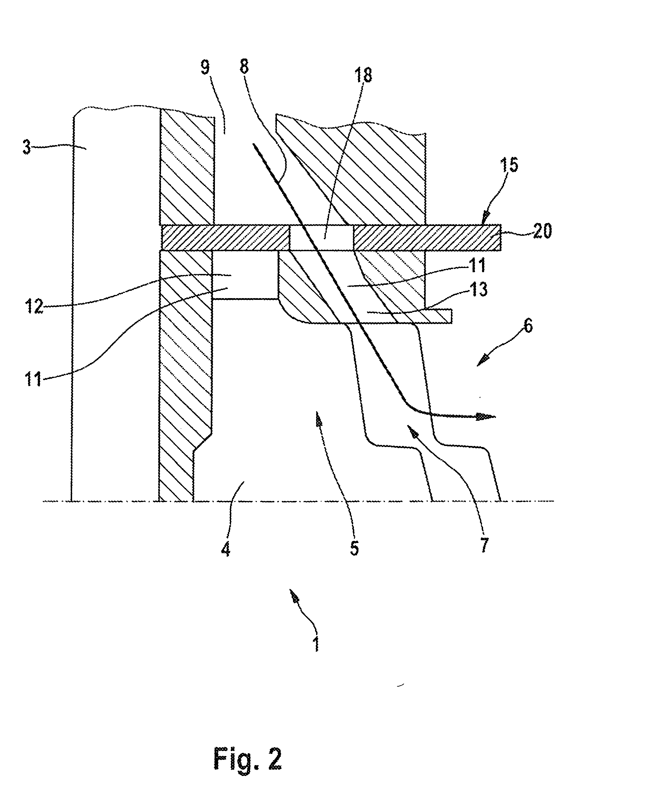

Figur 2 zeigt dieselbe Turbine 1 mit dem Turbinenrad 4, das wiederum die Radialbeschaufelung 5 und die Diagonalbeschaufelung 7 aufweist. Die Verstellblende 15 ist durch hier nicht dargestellte Antriebsmittel oder Aktuatoren (beispielsweise Elektromotoren oder sonstige elektromechanische Verstelleinrichtungen) derart verstellt worden, dass sie nunmehr den Radialmediumstromweg 12 sperrt, sodass dieser nicht vom Mediumstrom 8 beaufschlagt wird, und den Diagonalmediumstromweg 13 über das Langloch 18 freigibt. Demzufolge wird ausschließlich die Diagonalbeschaufelung 7 mit dem Mediumstrom 8 beaufschlagt, was einem Betrieb im Nennleistungsbereich der Turbine 1 (wenngleich auf Kosten maximalen Drehmoments) ermöglicht.

Die Verstellblende 15 ist bevorzugt als Verstellhülse 20 ausgebildet, die innerhalb des Gehäuses 3 im Bereich der Anströmeinrichtung 9 das Turbinenrad 4 umfangsseitig umgibt. Insbesondere ist es hierbei möglich, über den Umfang des Turbinenrads 4, beispielsweise Gleichwinkelbeabstandet, mehrere Mediumstromwege 11 vorzusehen, um eine gleichmäßige Beaufschlagung des Turbinenrads 4 bewirken zu können. Die Verstellhülse 20 kann hierbei die Verstellung der Anströmeinrichtung 9, also die Umschaltung jeweils von Radialmediumstromweg 12 zum Diagonalmediumstromweg 13 und umgekehrt, über den gesamten Umfang verteilt bewirken, wobei nur ein (hier nicht dargestellter) Betätigungsmechanismus erforderlich ist. Sämtliche Mediumstromwege 11, die über den Umfang verteilt sind, können demzufolge gleichzeitig und in mechanisch sehr einfacher Weise verstellt werden. Diese Ausführung als Verstellhülse ist sehr betriebssicher und langlebig.

## Patentansprüche

1. Turbine (1) eines Abgasturboladers (2) einer Brennkraftmaschine, insbesondere für ein Kraftfahrzeug, mit einem Turbinenrad (4) und einer Anströmeinrichtung (9) für ein dem Turbinenrad (4) zuzuführendes Medium, wobei das Turbinenrad (4) eine Radial- (5) und eine Diagonalbeschaufelung (7) aufweist und die Anströmeinrichtung (9) derart verstellbar ausgebildet ist, dass ein der Turbine (1) zugeführter Mediumstrom (8) in Abhängigkeit der Leistung und/oder des Drehmoments in radialer Richtung der Radialbeschaufelung (5) und in diagonaler Richtung der Diagonalbeschaufelung (7) zuführbar ist,
**dadurch gekennzeichnet,**
**dass** die Anströmeinrichtung (9) derart verstellbar ausgebildet ist, dass ein der Turbine (1) zugeführter Mediumstrom (8) in Abhängigkeit der Leistung und/oder des Drehmoments in radialer Richtung der Radialbeschaufelung (5) oder in diagonaler Richtung der Diagonalbeschaufelung (7) zuführbar ist,

2. Turbine (1) nach Anspruch 1, **dadurch gekennzeichnet, dass** die Anströmeinrichtung (9) eine verlagerbare Verstellblende (16) aufweist.

3. Turbine (1) nach einem der vorhergehenden Ansprüche, **dadurch gekennzeichnet, dass** die Verstellblende (16) axial verschiebbar gelagert ist.

4. Turbine (1) nach einem der vorhergehenden Ansprüche, **dadurch gekennzeichnet, dass** die Verstellblende (16) mit mehreren Mediumstromwegen (11) der Turbine (1) zusammenwirkt.

5. Turbine (1) nach einem der vorhergehenden Ansprüche, **dadurch gekennzeichnet, dass** die Verstellblende (16) als Verstellhülse (20) ausgebildet ist.

6. Turbine (1) nach einem der vorhergehenden Ansprüche, **dadurch gekennzeichnet, dass** die Verstellhülse (20) Durchbrüche (19), insbesondere Langlöcher (18), für das Medium aufweist.

7. Turbine (1) nach einem der vorhergehenden Ansprüche, **dadurch gekennzeichnet, dass** die Verstellhülse (20) zur Verstellung zwischen mehreren Mediumstromwegen (11) koaxial zum Turbinenrad (4) drehbar gelagert ist.

## Claims

1. Turbine (1) of an exhaust gas turbocharger (2) of an internal combustion engine, in particular for a motor vehicle, comprising a turbine wheel (4) and an inflow device (9) for a medium to be supplied to the turbine wheel (4), the turbine wheel (4) having both radial blading (5) and diagonal blading (7) and the inflow device (9) being designed to be adjustable such that a medium flow (8) supplied to the turbine (1) can be supplied, depending on power and/or torque, in the radial direction to the radial blading (5) and in the diagonal direction to the diagonal blading (7),
**characterised in that**
the inflow device (9) is designed to be adjustable such that a medium flow (8) supplied to the turbine (1) can be supplied, depending on power and/or torque, in the radial direction to the radial blading (5) or in the diagonal direction to the diagonal blading (7).

2. Turbine (1) according to claim 1, **characterised in that** the inflow device (9) has a displaceable adjustment diaphragm (16).

3. Turbine (1) according to any of the preceding claims, **characterised in that** the adjustment diaphragm (16) is axially displaceably mounted.

4. Turbine (1) according to any of the preceding claims, **characterised in that** the adjustment diaphragm (16) interacts with a plurality of medium flow paths (11) in the turbine (1).

5. Turbine (1) according to any of the preceding claims, **characterised in that** the adjustment diaphragm (16) is formed as an adjustment sleeve (20).

6. Turbine (1) according to any of the preceding claims, **characterised in that** the adjustment sleeve (20) has openings (19), in particular elongate holes (18), for the medium.

7. Turbine (1) according to any of the preceding claims, **characterised in that**, in order to be adjusted between a plurality of medium flow paths (11), the adjustment sleeve (20) is mounted such that it can rotate coaxially to the turbine wheel (4).

## Revendications

1. Turbine (1) d'un turbocompresseur à gaz d'échappement (2) d'un moteur à combustion interne, en particulier pour un véhicule automobile, avec une roue de turbine (4) et un dispositif de flux entrant (9) pour un médium à conduire à la roue de turbine (4), dans laquelle la roue de turbine (4) présente un aubage radial (5) et un aubage diagonal (7), et le dispositif de flux entrant (9) est constitué de façon réglable de telle sorte qu'un flux de médium (8) conduit à la turbine (1) peut être conduit, en fonction de la puissance et/ou du couple, dans la direction radiale à l'aubage radial (5) et dans la direction diagonale à l'aubage diagonal (7),
**caractérisée en ce que**
le dispositif de flux entrant (9) est constitué de façon réglable de telle sorte qu'un flux de médium (8) conduit à la turbine (1) peut être conduit, en fonction de la puissance et/ou du couple, dans la direction radiale à l'aubage radial (5) ou dans la direction diagonale à l'aubage diagonal (7).

2. Turbine (1) selon la revendication 1, **caractérisée en ce que** le dispositif de flux entrant (9) présente un obturateur de réglage (16) pouvant être déplacé.

3. Turbine (1) selon l'une des revendications précédentes, **caractérisée en ce que** l'obturateur de réglage (16) est supporté de façon à pouvoir coulisser axialement.

4. Turbine (1) selon l'une des revendications précédentes, **caractérisée en ce que** l'obturateur de réglage (16) coopère avec plusieurs voies de flux de médium (11) de la turbine (1).

5. Turbine (1) selon l'une des revendications précédentes, **caractérisée en ce que** l'obturateur de réglage (16) est constitué en tant que manchon de réglage (20).

6. Turbine (1) selon l'une des revendications précédentes, **caractérisée en ce que** le manchon de réglage (20) présente des traversées (19), en particulier des trous oblongs, pour le médium.

7. Turbine (1) selon l'une des revendications précédentes, **caractérisée en ce que** le manchon de réglage (20) est supporté de façon rotative de façon coaxiale à la roue de turbine (4) pour le réglage entre plusieurs voies de flux de médium (11).
